# FASCICULE DE BREVET EUROPEEN

(11) **EP 1 632 424 B1**
(45) Date de publication et mention de la délivrance du brevet: **25.07.2012**
(21) Numéro de dépôt: 05291816.6
(22) Date de dépôt: 31.08.2005
(51) Int. Cl.: B62D 29/00

(54) **Procédé de moulage d'une pièce hybride comportant un insert métallique et une partie en matière plastique**
Spritzgießverfahren für ein Hybrid-Bauteil mit einem metallischen Einlegeteil
Injection moulding method for a hybrid part with a metallic insert

(30) Priorité: 03.09.2004 FR 0409360
(43) Date de publication de la demande: 08.03.2006
(60) Demande divisionnaire: 11164811.9
(73) Titulaire: Faurecia Bloc Avant, 92000 Nanterre (FR)
(72) Inventeur: Frey, Stéphane, 25700 Valentigney (FR); Brugiere, Nicolas, 90000 Belfort (FR); Girolimetto, Yves, 25260 Etouvans (FR)
(74) Mandataire: Blot, Philippe Robert Emile

(56) Documents cités:
- EP-A- 0 976 519
- US-B1- 6 378 268
- PATENT ABSTRACTS OF JAPAN vol. 2000, no. 01, 31 janvier 2000 (2000-01-31) -& JP 11 298158 A (TOHOKU MUNEKATA CO LTD), 29 octobre 1999 (1999-10-29)
- PATENT ABSTRACTS OF JAPAN vol. 004, no. 147 (M-036), 16 octobre 1980 (1980-10-16) & JP 55 098696 A (HITACHI LTD), 26 juillet 1980 (1980-07-26)
- PATENT ABSTRACTS OF JAPAN vol. 1997, no. 10, 31 octobre 1997 (1997-10-31) -& JP 09 155920 A (NOK CORP), 17 juin 1997 (1997-06-17)
- PATENT ABSTRACTS OF JAPAN vol. 006, no. 181 (M-156), 17 septembre 1982 (1982-09-17) -& JP 57 089944 A (HASHIMOTO FORMING CO LTD), 4 juin 1982 (1982-06-04)
- STRASSER F ET AL: "Stanzteile zum Einbetten in Kunststoffteile" KUNSTSTOFFE, CARL HANSER VERLAG. MUNCHEN, DE, vol. 78, no. 2, février 1988 (1988-02), pages 151-153, XP002167842 ISSN: 0023-5563

## Description

L'invention concerne un procédé de moulage d'une face avant technique de véhicule automobile comportant un insert métallique et une partie en matière plastique surmoulée sur l'insert métallique.

Dans de nombreuses industries et en particulier dans l'industrie automobile, on fabrique et l'on utilise des pièces hybrides comportant un insert métallique et une partie en matière plastique surmoulée sur l'insert métallique.

En particulier, on réalise sous forme de pièces hybrides des éléments de construction qui peuvent être de grandes dimensions tels que des faces avant techniques fixées sur une structure de véhicule automobile, dans une disposition transversale, à l'avant du moteur.

Les faces avant techniques constituent des éléments de support pour des pièces de carrosserie et des composants tels que des blocs optiques, pare-chocs, calandres, échangeurs de chaleur, avertisseurs et serrures de capot. Les sous-ensembles ainsi obtenus, appelés blocs avant, permettent de fixer l'ensemble des composants et appareils en une seule opération sur la ligne de fabrication des véhicules automobiles. Les blocs avant peuvent être fabriqués dans un atelier du constructeur automobile ou chez des équipementiers.

La réalisation sous forme hybride des faces avant s'est imposée comme une solution permettant de satisfaire des exigences généralement contraires quant aux propriétés de l'élément de structure, par exemple des exigences de légèreté et de résistance mécanique, en particulier aux chocs.

Les faces avant techniques, de forme généralement plane, sont fixées à la partie antérieure de deux longerons du véhicule automobile et reliées le plus souvent aux ailes avant du véhicule, dans un plan transversal vertical YZ du véhicule automobile. Lorsqu'elles sont réalisées sous forme hybride de telles faces avant comportent une plaque en matière plastique rendue solidaire par surmoulage d'un élément de renfort en métal s'étendant suivant la direction longitudinale de la face avant, c'est-à-dire la direction transversale du véhicule automobile. L'élément métallique de renfort est généralement réalisé sous la forme d'un profilé ayant une section transversale en forme de canal. La matière plastique surmoulée est rendue solidaire de l'élément métallique de renfort, en particulier suivant les bords longitudinaux du profilé en forme de canal, par l'intermédiaire de trous traversant les parois du canal au voisinage de leurs bords libres ou de tronçons de la paroi du canal métallique repliés d'un seul côté des parois du canal.

De tels modes d'accrochage de la matière plastique surmoulée sur l'élément métallique ne permettent généralement pas d'obtenir une liaison très résistante du fait que les ouvertures suivant le bord du canal ne peuvent être prévues que dans des zones espacées, dans le cas du premier mode de réalisation, et que les tronçons repliés du bord du canal, dans le cas du second mode de réalisation, ne peuvent être entièrement noyés dans la matière plastique, pour qu'on puisse assurer le démoulage sans prévoir de parties complexes en contredépouille.

On ne disposait donc pas jusqu'ici de procédé de moulage permettant de réaliser par surmoulage un accrochage très résistant entre un insert métallique et une partie en matière plastique d'une pièce hybride, en particulier d'une face avant technique de véhicule automobile.

US 6 378 268 décrit un procédé de moulage d'une face avant technique dont l'insert comporte des languettes d'accrochage. Le déplacement relatif de la face avant technique et de la partie mobile du moule au moment du démoulage est selon une direction inclinée par rapport aux languettes.

US 5 580 122 décrit une face avant technique avec un insert métallique comportant des trous pour permettre l'accrochage de la matière plastique surmoulée.

Le but de l'invention est donc de proposer un procédé de moulage d'une pièce hybride comportant un insert métallique et une partie en matière plastique surmoulée sur l'insert métallique dans laquelle sont noyés des éléments d'accrochage de l'insert métallique, qui permette d'obtenir une liaison très résistante entre l'insert métallique et la matière plastique, tout en étant d'une mise en oeuvre simple et permettant de réaliser facilement le démoulage de la pièce sans prévoir de formes complexes en contredépouille.

Dans ce but :
- on réalise un insert métallique ayant au moins une partie en forme de plaque sensiblement plane présentant au moins un bord libre, sur au moins un côté de l'insert métallique,
- on réalise, suivant le bord libre de la partie en forme de plaque de l'insert et suivant toute son épaisseur, des incisions successives de longueur sensiblement constante dans une direction sensiblement perpendiculaire au bord libre, espacées l'une de l'autre dans la direction du bord libre, de manière à obtenir une pluralité de zones successives de la partie en forme de plaque de l'insert séparées l'une de l'autre par une incision,
- on effectue le pliage de zones successives de la partie en forme de plaque de l'insert, le long d'une ligne sensiblement parallèle au bord libre de l'insert, passant par des extrémités des incisions opposées au bord libre pour obtenir une pluralité de languettes d'accrochage dans au moins un plan ayant une disposition angulaire par rapport à la partie en forme de plaque, séparées par des espaces libres le long du bord libre de l'insert, et d'un côté au moins de la partie en forme de plaque de l'insert,
- on place au moins une partie de l'insert comportant les languettes d'accrochage dans un moule de moulage de la pièce hybride,
- on injecte la matière plastique dans le moule de manière à noyer les languettes d'accrochage de l'insert dans la matière plastique, et
- on sépare la pièce hybride refroidie du moule par un déplacement relatif de la pièce hybride moulée et d'au moins une partie du moule dans une direction parallèle aux languettes d'accrochage.

Selon des modalités plus particulières qui peuvent être présentes isolément ou en combinaison :
- l'insert métallique est réalisé par découpage d'une tôle métallique, l'ensemble de l'insert étant sous la forme d'une plaque sensiblement plane.
- les zones successives de la partie en forme de plaque de l'insert sont pliées à 90° par rapport au plan de la partie de l'insert en forme de plaque.
- les zones de la partie en forme de plaque de l'insert sont pliées alternativement d'un côté et de l'autre de la partie de l'insert en forme de plaque, chacune des languettes étant disposée d'un côté de la partie de l'insert en forme de plaque, entre deux espaces libres séparant deux languettes successives repliées du même côté de la partie de l'insert en forme de plaque.

- on injecte la matière plastique dans une partie de l'empreinte du moule dans laquelle sont introduites les languettes, de manière à obtenir une paroi de la pièce hybride renforcée par les languettes ayant une disposition angulaire par rapport à la partie de l'insert en forme de plaque.
- on réalise le pliage des languettes à 90° par rapport à la partie de l'insert en forme de plaque et on réalise par moulage au moins une paroi en matière plastique renforcée par les languettes sensiblement perpendiculaires à la partie de l'insert en forme de plaque.

Afin de bien faire comprendre l'invention, on va décrire, à titre d'exemple, la mise en oeuvre du procédé de moulage dans le cas d'une pièce hybride telle qu'une face avant du véhicule automobile, comportant un noyau métallique plan découpé dans une tôle suivant au moins un bord libre duquel on fixe une paroi en matière plastique sensiblement perpendiculaire à l'insert plan.
La figure 1 représente une vue en plan d'une partie d'un bord libre de l'insert plan de la pièce hybride, après réalisation d'incisions et avant pliage.
La figure 2 représente une vue en perspective du bord correspondant de l'insert plan, après pliage de languettes d'accrochage, au moment de sa mise en place dans un moule en deux parties.

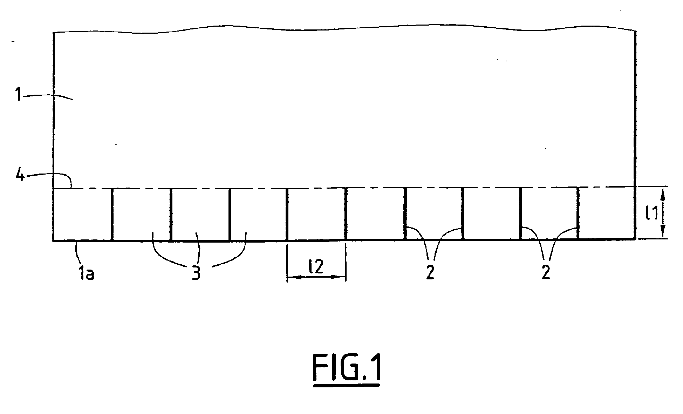

Sur la figure 1, on a représenté une partie d'un bord libre 1a d'un insert métallique découpé dans une tôle, par exemple en acier, pour la réalisation d'une pièce hybride.

Après découpage de l'insert dans la tôle métallique, on réalise, suivant le bord 1a de l'insert en forme de plaque plane, des incisions 2, suivant toute l'épaisseur de la plaque plane, dans une direction perpendiculaire au bord 1a et sur une longueur I₁, deux incisions 2 successives étant séparées par une distance I₂ constante.

Par exemple, la distance I₂ peut être sensiblement égale à 20 mm.

On obtient ainsi des zones successives 3 du bord de l'insert en forme de plaque, deux zones 3 successives étant séparées par une incision 2.

Chacune des incisions 2 est réalisée depuis le bord 1 a de l'insert 1 sur la longueur l₁, jusqu'à la ligne 4 parallèle au bord 1 a constituant une ligne de pliage des zones 3 de l'insert dans une opération ultérieure de pliage alterné.

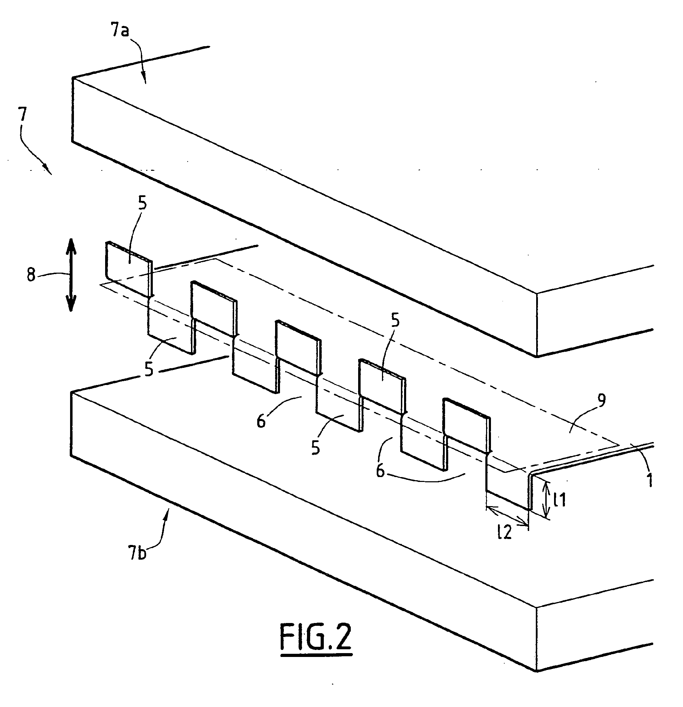

Sur la figure 2, on a représenté le bord de l'insert 1 en forme de plaque après pliage alterné des zones 3 à 90°, autour de la direction 4 parallèle au bord 1 a de l'insert 1.

Les zones successives 3 sont pliées alternativement d'un côté et de l'autre de la plaque 1, c'est-à-dire à 90° par rapport à une première et à une seconde faces de l'insert. On obtient ainsi des languettes d'accrochage 5 dans un plan généralement perpendiculaire à la plaque recoupant la plaque suivant la ligne 4. Chacune des languettes 5 repliée d'un premier côté de la plaque se trouve entre deux languettes 5 repliées de l'autre côté de la plaque. Chaque languette d'accrochage 5 se trouve ainsi entre deux espaces libres 6, sur chacun des côtés de l'insert plan.

Comme il est visible sur la figure 3, l'insert 1, après pliage, est placé dans un moule, par exemple dans un moule 7 en deux parties 7a, 7b, mobiles l'une par rapport à l'autre.

Sur la figure 2, le moule 7 a été représenté à l'état ouvert, les deux parties 7a, 7b du moule étant écartées l'une de l'autre. On introduit l'insert 1 dans le moule à l'état ouvert, de manière que le bord de l'insert comportant les languettes d'accrochage 5 se trouve dans une partie de l'empreinte du moule dans laquelle pénètre la matière plastique lors du moulage. Le moule représenté de manière schématique sur la figure 2 peut comporter différentes cavités et des noyaux permettant de réaliser le moulage d'une pièce hybride de forme particulière, par exemple une face avant technique comportant des parois en matière plastique perpendiculaires à la plaque plane de l'insert 1 suivant son bord 1a sur lequel ont été prévues les languettes d'accrochage 5. Dans ce cas, la partie de l'insert 1 comportant les languettes 5 est introduite dans une partie de l'empreinte du moule assurant le moulage d'une paroi en matière plastique perpendiculairement à la plaque de l'insert 1 et sur ses deux côtés.

Après mise en place de l'insert et éventuellement de noyaux dans le moule de moulage, on referme le moule en rapprochant les deux parties 7a et 7b (flèche 8) et on injecte une matière plastique à l'intérieur du moule, en particulier dans la partie de l'empreinte dans laquelle sont introduites les languettes 5 pour le moulage de la paroi en matière plastique renforcée perpendiculaire à la plaque de l'insert 1.

La direction d'ouverture et de fermeture du moule (double flèche 8) est parallèle au plan dans lequel sont pliées les languettes 5 qui est perpendiculaire à la plaque de l'insert 1.

Par injection de matière plastique dans le moule, on réalise en particulier le remplissage de la partie d'empreinte renfermant les languettes 5 et réalisant le moulage de la paroi en matière plastique perpendiculaire à la plaque de l'insert. La zone de remplissage par la matière plastique a été représentée de manière conventionnelle par un rectangle allongé 9 sur la figure 2.

Après solidification et refroidissement de la matière plastique injectée, on ouvre le moule suivant la direction d'ouverture donnée par la double flèche 8 qui est parallèle aux languettes d'accrochage 5 totalement noyées dans la matière plastique. Le démoulage de la pièce hybride peut être effectué facilement, du fait qu'il est réalisé perpendiculairement à la plaque de l'insert 1, c'est-à-dire suivant la direction du plan des languettes 5 et de la paroi en matière plastique surmoulée renforcée par les languettes 5. En outre, l'accrochage de la matière plastique sur l'insert est réalisé de manière très résistante, puisque les languettes 5 sont totalement noyées dans la matière plastique qui remplit également les espaces libres 6 entre les languettes.

Le procédé suivant l'invention permet donc de réaliser facilement des pièces hybrides avec une très bonne liaison entre un insert métallique et une matière plastique et comportant, en particulier, des parois en matière plastique qui peuvent être perpendiculaires à l'insert plan.

La pièce hybride qui comporte un noyau parfaitement solidarisé à la matière plastique surmoulée présente une thermodépendance faible, c'est-à-dire un effet très limité de la température d'usage sur ses fréquences propres et ses caractéristiques mécaniques.

En effet, les propriétés mécaniques d'un élément de structure sous sollicitations statiques ou vibratoires sont fortement dépendantes du module élastique de l'élément.

Le module de Young des matières plastiques dépend fortement de la température.

L'utilisation d'un noyau métallique thermiquement stable parfaitement solidaire de la matière plastique permet de réduire la thermodépendance de la pièce qui présente un comportement pratiquement constant à toutes les températures d'usage.

L'invention ne se limite pas strictement au mode de réalisation qui a été décrit.

C'est ainsi qu'on peut envisager par exemple la fabrication de pièces hybrides comportant une paroi en matière plastique renforcée sur un seul côté de la plaque plane de l'insert. Dans ce cas, on peut supprimer par découpage des languettes 5 d'un côté de la plaque, avant d'introduire l'insert dans le moule comportant une empreinte ou cavité assurant le moulage de la paroi en matière plastique dans laquelle on introduit les languettes situées d'un côté de la plaque plane de l'insert.

L'insert 1 peut être réalisé, dans son ensemble, sous la forme d'une plaque plane ou comporter, en plus de la partie plane en forme de plaque, d'autres parties non planes ou d'autres parties rapportées.

Il serait également possible de réaliser des incisions et découpages pour obtenir par pliage des languettes d'accrochage dans une zone de la partie de l'insert en forme de plaque plane qui n'est pas située suivant un bord libre de l'insert.

## Revendications

1. Procédé de moulage d'une face avant technique de véhicule automobile comportant un insert métallique (1) et une partie en matière plastique surmoulée sur l'insert métallique (1) dans laquelle sont noyés des éléments (5) d'accrochage de l'insert métallique (1), **caractérisé par le fait :**
- **qu'**on réalise un insert métallique (1) ayant au moins une partie en forme de plaque sensiblement plane présentant au moins un bord libre (1a). sur au moins un côté de l'insert métallique (1),
- **qu'**on réalise, suivant le bord libre (1a) de la partie en forme de plaque de l'insert (1) et suivant toute son épaisseur, des incisions (2) successives de longueur sensiblement constante dans une direction sensiblement perpendiculaire au bord libre (1a), espacées l'une de l'autre dans la direction du bord libre (1a), de manière à obtenir une pluralité de zones (3) successives de la partie en forme de plaque de l'insert (1) séparées l'une de l'autre par une incision (2),
- **qu'**on effectue le pliage de zones (3) successives de la partie en forme de plaque de l'insert (1), le long d'une ligne (4) sensiblement parallèle au bord libre (1a) de l'insert (1), passant par des extrémités des incisions (2) opposées au bord libre (1a) pour obtenir une pluralité de languettes d'accrochage (5) dans au moins un plan ayant une disposition angulaire par rapport à la partie en forme de plaque, séparées par des espaces libres (6) le long du bord libre (1a) de l'insert (1), et d'un côté au moins de la partie en forme de plaque de l'insert (1),
- **qu'**on place au moins une partie de l'insert (1) comportant les languettes d'accrochage (5) dans un moule (7a, 7b) de moulage de la face avant technique,
- **qu'**on injecte la matière plastique dans le moule (7a, 7b) de manière à noyer les languettes d'accrochage (5) de l'insert (1) dans la matière plastique, et
- **qu'**on sépare la face avant technique refroidie du moule (7a, 7b) par un déplacement relatif de la face avant technique moulée et d'au moins une partie du moule (7a, 7b) dans une direction parallèle aux languettes d'accrochage (5).

2. Procédé suivant la revendication 1, **caractérisé par le fait que** l'insert métallique est réalisé par découpage d'une tôle métallique, l'ensemble de l'insert (1) étant sous la forme d'une plaque sensiblement plane.

3. Procédé suivant l'une quelconque des revendication 1 et 2, **caractérisé par le fait que** les zones successives (3) de la partie en forme de plaque de l'insert (1) sont pliées à 90° par rapport au plan de la partie de l'insert (1) en forme de plaque.

4. Procédé suivant la revendication 3, **caractérisé par le fait que** les zones (3) de la partie en forme de plaque de l'insert (1) sont pliées alternativement d'un côté et de l'autre de la partie de l'insert (1) en forme de plaque, chacune des languettes (5) étant disposée d'un côté de la partie de l'insert (1) en forme de plaque, entre deux espaces libres (6) séparant deux languettes (5) successives repliées du même côté de la partie de l'insert (1) en forme de plaque.

5. Procédé suivant l'une quelconque des revendications 1 à 4, **caractérisé par le fait qu'**on injecte la matière plastique dans une partie de l'empreinte du moule (7) dans laquelle sont introduites les languettes (5), de manière à obtenir une paroi de la face avant technique renforcée par les languettes (5) ayant une disposition angulaire par rapport à la partie de l'insert (1) en forme de plaque.

6. Procédé suivant la revendication 5, **caractérisé par le fait qu'**on réalise le pliage des languettes (5) à 90° par rapport à la partie de l'insert (1) en forme de plaque et qu'on réalise par moulage au moins une paroi en matière plastique renforcée par les languettes (5) sensiblement perpendiculaires à la partie de l'insert (1) en forme de plaque.

## Claims

1. Method of moulding a front-end panel unit of an automotive vehicle comprising a metal insert (1) and a part made from plastic material over-moulded onto the metal insert (1) in which hooking elements (5) of the metal insert (1) are embedded, **characterised in that**:
- a metal insert (1) is made with at least one part in the form of a substantially flat panel with at least one free edge (1a) on at least one side of the metal insert (1),
- successive incisions (2) of a substantially constant length are made following the free edge (1a) of the part constituting the panel of the insert (1) and following all its thickness in a direction substantially perpendicular to the free edge (1a), spaced apart from one another in the direction of the free edge (1a) so as to obtain a plurality of successive zones (3) in the part constituting the panel of the insert (1) separated from one another by an incision (2),
- successive zones (3) of the part constituting the panel of the insert (1) are folded along a line (4) substantially parallel with the free edge (1a) of the insert (1), passing through the ends of the incisions (2) opposite the free edge (1a) in order to obtain a plurality of hooking tabs (5) in at least one plane with an angular disposition relative to the part constituting the panel, separated by free spaces (6) along the free edge (1a) of the insert (1) and on one side of at least the part constituting the panel of the insert (1),
- at least a part of the insert (1) incorporating the hooking tabs (5) is placed in a mould (7a, 7b) for moulding the front-end panel unit,
- the plastic material is injected into the mould (7a, 7b) so as to embed the hooking tabs (5) of the insert (1) in the plastic material, and
- the cooled front-end panel unit is removed from the mould (7a, 7b) by a relative displacement of the moulded front-end panel unit and at least a part of the mould (7a, 7b) in a direction parallel with the hooking tabs (5).

2. Method as claimed in claim 1, **characterised in that** the metal insert is made by cutting from a metal sheet, the insert (1) as a whole being in the form of a substantially flat panel.

3. Method as claimed in any one of claims 1 and 2, **characterised in that** the successive zones (3) of the part constituting the panel of the insert (1) are folded to 90° relative to the plane of the part of the insert (1) constituting the panel.

4. Method as claimed in claim 3, **characterised in that** the zones (3) of the part constituting the panel of the insert (1) are folded alternately on one side and the other of the part of the insert (1) constituting the panel, each of the tabs (5) being disposed on a side of the part of the insert (1) constituting the panel between two free spaces (6) separating two successive tabs (5) folded on the same side of the part of the insert (1) constituting the panel.

5. Method as claimed in any one of claims 1 to 4, **characterised in that** the plastic material is injected into a part of the imprint of the mould (7) into which the tabs (5) are introduced so as to obtain a front-end wall reinforced by the tabs (5) at an angular disposition relative to the part of the insert (1) constituting the panel.

6. Method as claimed in claim 5, **characterised in that** the tabs (5) are folded to 90° relative to the part of the insert (1) constituting the panel and at least one wall of plastic material reinforced by the tabs (5) substantially perpendicular to the part of the insert (1) constituting the panel is made by moulding.

## Patentansprüche

1. Verfahren zum Gießen einer vorderen Funktionsfläche eines Kraftfahrzeugs, mit einem metallischen Einsatz (1) und einem Abschnitt aus Plastikmaterial, der von dem metallischen Einsatz (1) abgeformt ist und in welchem Ankopplungselemente (5) des metallischen Einsatzes (1) eingelassen sind, **gekennzeichnet durch**
- Verwirklichen eines metallischen Einsatzes (1), der zumindest einen im Wesentlichen plattenförmigen Abschnitt mit zumindest einem freien Rand (1a) an zumindest einer Seite des metallischen Einsatzes (1) hat,
- Verwirklichen von aufeinanderfolgenden Einschnitten (2) entlang dem freien Rand (1a) des plattenförmigen Abschnitts des Einsatzes (1) und entlang seiner gesamten Dicke, wobei die Einschnitte eine im Wesentlichen konstante Länge in einer Richtung haben, die im Wesentlichen senkrecht auf dem freien Rand (1a) steht, wobei die Einschnitte voneinander in Richtung des freien Rands (1a) derart beabstandet sind, dass eine Vielzahl von aufeinanderfolgenden Bereichen (3) des plattenförmigen Abschnitts des Einsatzes (1) erhalten wird, die voneinander durch einen Einschnitt (2) getrennt sind,
- Umbiegen der aufeinanderfolgenden Bereiche (3) des plattenförmigen Abschnitts des Einsatzes (1) an einer Linie (4), die im Wesentlichen parallel zu dem freien Rand (1a) des Einsatzes (1) ist und **durch** die dem freien Rand (1a) gegenüberliegenden Enden der Einschnitte (2) verläuft, um eine Vielzahl von Ankopplungszungen (5) in zumindest einer Ebene mit einer Anordnung in einem Winkel in Bezug auf den plattenförmigen Abschnitt zu erhalten, wobei die Ankopplungszungen **durch** Freiräume (6) entlang des freien Rands (1a) des Einsatzes (1) an einer Seite von zumindest dem plattenförmigen Abschnitt des Einsatzes (1) getrennt sind,
- Platzieren von zumindest einem die Ankopplungszungen (5) aufweisenden Abschnitt des Einsatzes (1) in eine Gussform (7a, 7b) zum Gießen der vorderen Funktionsfläche,
- Einspritzen des Plastikmaterials in die Gussform (7a, 7b) derart, dass die Ankopplungszungen (5) des Einsatzes (1) in dem Plastikmaterial eingelassen sind, und
- Trennen der abgekühlten vorderen Funktionsfläche von der Gießform (7a, 7b) **durch** Relativverschiebung der gegossenen vorderen Funktionsfläche und zumindest eines Abschnitts der Gießform (7a, 7b) in eine Richtung parallel zu den Ankopplungszungen (5).

2. Verfahren gemäß Anspruch 1, **dadurch gekennzeichnet, dass** der metallische Einsatz durch Schneiden eines Metallblechs verwirklicht wird, wobei der gesamte Einsatz (1) in Form einer im Wesentlichen ebenen Platte ist.

3. Verfahren gemäß einem der Ansprüche 1 oder 2, **dadurch gekennzeichnet, dass** die aufeinanderfolgenden Bereiche (3) des plattenförmigen Abschnitts des Einsatzes (1) um 90° in Bezug auf die Ebene des plattenförmigen Abschnitts des Einsatzes (1) gebogen sind.

4. Verfahren gemäß Anspruch 3, **dadurch gekennzeichnet, dass** die Bereiche (3) des plattenförmigen Abschnitts des Einsatzes (1) abwechselnd auf die eine und andere Seite des plattenförmigen Abschnitts des Einsatzes (1) gebogen sind, wobei jede der Zungen (5) an einer Seite des plattenförmigen Abschnitts des Einsatzes (1) zwischen zwei Freiräumen (6) angeordnet ist, die zwei aufeinanderfolgende Zungen (5) trennen, die auf die gleiche Seite des plattenförmigen Abschnitts des Einsatzes (1) umgeknickt sind.

5. Verfahren gemäß einem der Ansprüche 1 bis 4, **dadurch gekennzeichnet, dass** das Plastikmaterial in einen Abschnitt der Vertiefung der Gießform (7) eingespritzt wird, in welchem die Zungen (5) eingesetzt sind, so dass eine Wandung der vorderen Funktionsfläche erhalten wird, die durch die Zungen (5), die in einem Winkel in Bezug auf den plattenförmigen Abschnitt des Einsatzes (1) angeordnet sind, verstärkt wird.

6. Verfahren gemäß Anspruch 5, **dadurch gekennzeichnet, dass** die Zungen (5) um 90° in Bezug auf den plattenförmigen Abschnitt des Einsatzes (1) umgebogen werden, und dass durch Gießen zumindest eine Wandung aus einem Plastikmaterial verwirklicht wird, die durch die Zungen (5) verstärkt wird, die im Wesentlichen senkrecht auf dem plattenförmigen Abschnitt des Einsatzes (1) stehen.
